# EUROPEAN PATENT APPLICATION

(11) **EP 1 058 200 A2**
(43) Date of publication of application: **06.12.2000**
(21) Application number: 00304754.5
(22) Date of filing: 05.06.2000
(51) Int. Cl.: G06F 17/60

(54) **Apparatus and method for itinerary flagging program for air charter flights**

(30) Priority: 03.06.1999 US 137605 P; 01.06.2000 US 585818
(71) Applicant: Flighttime.Com, Inc., San Francisco, CA 94102 (US)
(72) Inventor: McCown, David, San Francisco, CA 94117 (US); Scott, John, San Francisco, CA 94117 (US); Onge, Ron, New York, NY 10021 (US)
(74) Representative: Stuttard, Garry Philip

(57) **Abstract**

Methods and apparatus for a flight itinerary flagging program for air charter flights that analyzes itineraries and informs travelers of itineraries that are suitable for air charter. During operation, the flight itinerary flagging program receives a flight itinerary and generates a weight total for the itinerary by applying a set of weighted rules to the itinerary. The weight total is generated by initially setting the weight to zero. A weight score for each rule is then calculated by comparing the itinerary to the rule. If the total weight score for all of the rules exceeds a predetermined threshold, the itinerary is flagged as suitable for air charter. Otherwise it is not flagged. In various embodiments of the invention, the set of rules fall into three categories, including convenience rules, a productivity rules, and price rules. In accordance with various embodiments, the flight itinerary flagging program of the invention can reside on a Global Distribution Service, a Computer Reservation System, within the reservation computing infrastructure of a commercial airline, or hosted on a web server and accessible by travelers over the Internet.

## Description

### BACKGROUND OF THE INVENTION

### 1. Field of Invention

The present invention relates generally to a method and apparatus for air charter travel, and more particularly, the present invention relates to methods and apparatus for an itinerary flagging program that analyzes itineraries submitted to global distribution service systems, computer reservation systems and travel web sites and informs travelers of itineraries that are suitable for air charter.

### 2. Description of the Related Art

Aircraft are chartered (sometimes referred to in the industry as air taxi) for a variety of convenience, productivity and pricing reasons, including: lack of scheduled commercial airline availability for desired dates of travel; the cost of commercial flights for certain itineraries; the travel departure and/or destination location(s) is not serviced by commercial airlines; or the duration of layovers for connecting commercial flights is not acceptable to the traveler. In spite of the many plausible reasons for air charter, this market remains largely untapped. The air charter industry to date has yet to provide a widely accessible automated tool which effectively informs customers that air charter is a viable option for their travel needs. Today charter flights are typically booked by directly contacting a charter airline or operator and making arrangements. Travelers will thus often book travel plans with commercial airlines without any idea that a more convenient and/or cost-effective charter plane could have been arranged to meet their travel needs.

A system and method for an itinerary flagging program that analyzes itineraries submitted to global distribution service systems, computer reservation systems and travel web sites and indicates to travelers when itineraries are suitable for air charter is therefore needed.

### SUMMARY OF THE INVENTION

The present invention relates to a flight itinerary flagging program for air charter flights that analyzes itineraries and indicates to travelers when itineraries are suitable for air charter. During operation, the flight itinerary flagging program receives a flight itinerary and generates a weight total for the itinerary by applying a set of weighted rules to the itinerary. The weight total is generated by initially setting the weight to zero. A weight score for each rule is then calculated by comparing the itinerary to the rule. If the total weight scope for all of the rules exceeds a predetermined threshold, the itinerary is flagged as suitable for air charter. Otherwise it is not flagged. In various embodiments of the invention, the set of rules fall into three categories, including convenience rules, productivity rules, and price rules. In accordance with various embodiments, the flight itinerary flagging program of the invention can reside on a Global Distribution Service, a Computer Reservation System, within the reservation computing infrastructure of a commercial airline, or hosted on a web server and accessible by travelers over the Internet. These and other advantages of the present invention will become apparent upon reading the following detailed descriptions and studying the various figures of the drawings.

### BRIEF DESCRIPTION OF THE DRAWINGS

The invention may best be understood by reference to the following description taken in conjunction with the accompanying drawings in which:

Figure 1 is a diagram of the Itinerary Flagging Program (IFP) 10 of the present invention.

Figure 2 is a flow diagram of the itinerary flagging program according to the present invention.

Figure 3 is a flow diagram for applying the rules and weights of the itinerary flagging program to an itinerary to determine if it is suitable for air charter according to the present invention.

Figure 4A through 4G are a series of diagrams illustrating exemplary rules and weights of the itinerary flagging program according to the present invention.

Figures 5A through 5C are block diagrams of the itinerary flagging program used in various systems respectively according to the present invention.

Figures 6 is system level block diagram of the itinerary flagging program in a reservation booking system used by a commercial airline according to the present invention.

Figures 7A through 7D are a series of screen shots used to illustrate the operation of the itinerary flagging program according to the present invention.

### DETAILED DESCRIPTION OF THE EMBODIMENTS

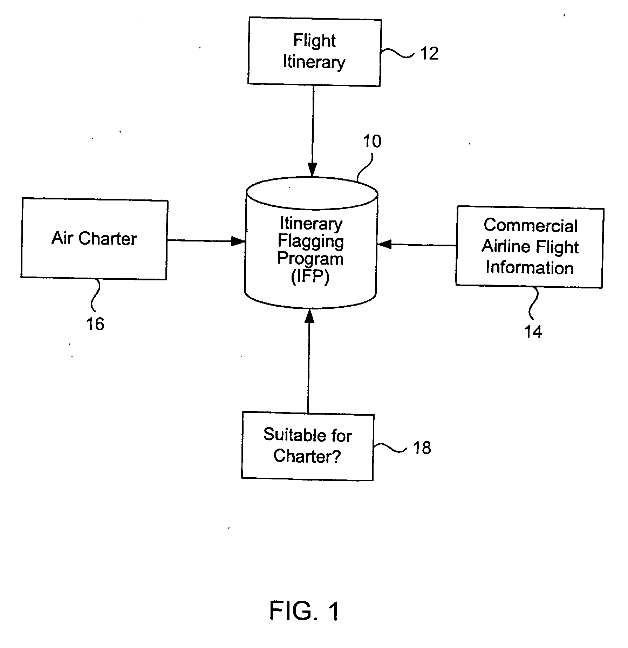

Referring to Figure 1, a diagram of the Itinerary Flagging Program (IFP) 10 of the present invention is shown. The IFP 10 is a software module that intelligently analyzes a desired flight itinerary 12, commercial flight information 14 for fulfilling the itinerary 12 on a commercial airline, and air charter information 16 to determine if the flight itinerary 12 is suitable for air charter 18. The IFP 10 includes a set of one or more weighted rules that are applied to the itinerary 12 to determine if it is suitable for air charter. According to one embodiment of the invention, these rules generally fall into three categories including convenience, productivity and price. Some exemplary rules for each category include:
Convenience:
- Destinations per day
- Availability on scheduled airlines for requested dates
- Availability of scheduled commercial airlines within defined period of requested travel times
- No airports in the preferred departure or arrival locations that are scheduled by commercial airlines
Productivity:
- Comparison of total time en route (including layovers for connecting flights) on scheduled commercial airlines versus total en route time for travel by air charter
- Class of travel (first class, business, or economy) requested by passenger(s).
Price for all passengers in itinerary:
- Advanced purchase
- Cost per mile
- Travel city pairs
- Other defined departure or arrival points

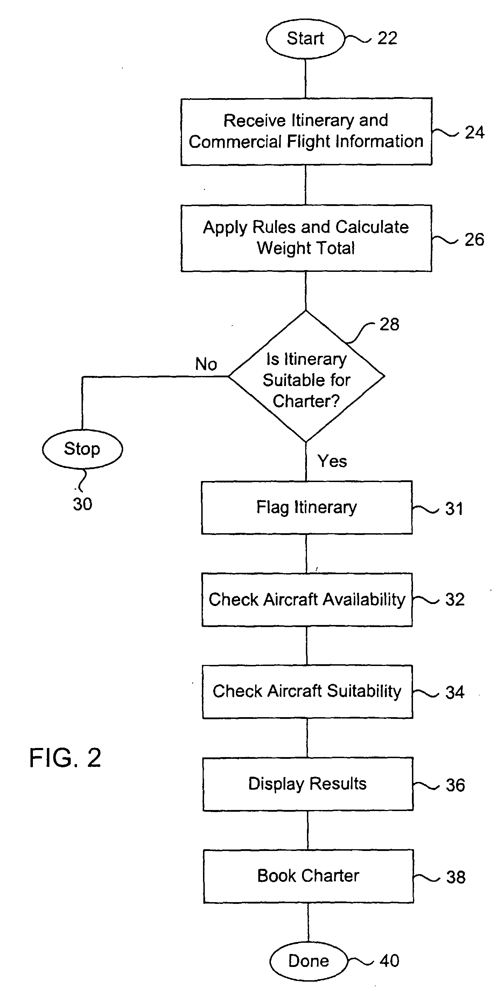

Referring to Figure 2, a flow diagram of the itinerary flagging program 10 for air charter according to the present invention is shown. At the start (step 22) of execution of the IFP 10, the IFP 10 receives the itinerary 12 and/or the commercial flight information 14 for the itinerary (step 24). The itinerary 12 includes the particulars for the trip, including one or more of the following: the number of passengers, class of travel, destination and departure locations, desired date and times of departures and arrivals. The rules of the IFP 10 are applied and a weight total for the itinerary is calculated (step 26). The IFP 10 then determines the suitability of a given itinerary for air charter based on the weight total (decision diamond 28). If the weight total does not meet or exceed a predetermined threshold, then the IFP 10 determines that the itinerary is not suitable for air charter (step 30). On the other hand, if the weight total meets or exceeds the predetermined threshold, then the itinerary is flagged as suitable for air charter. (step 31) In some embodiments of the invention, the IFP 10 is complete once and itinerary is flagged as suitable for air charter or not. In other embodiments, the IFP 10 may help locate a suitable air charter so it may be booked. In this situation, the IFP 10 then accesses the air charter information 16 and checks aircraft availability (step 32) and the suitability of the available aircraft (step 34), and then displays the available and suitable aircraft along with cost and other pertinent information (step 36). Thereafter the traveler is provided the option of selecting and booking one of the displayed aircraft that could be used to satisfy the itinerary. Once this sequence is completed, the IPF 10 is done for this itinerary (step 30). For more information on 32-38, see provisional U.S. patent application Serial No. (attorney docket no FTE1P003) entitled "Matching Air Charter Capacity with Suitable Itineraries Via the Internet" filed March 10, 2000 and provisional U.S. patent application Serial No. 60/147,225 entitled "Aircraft Recommendation Program for Air Charter", both assigned to the assignee of the present invention.

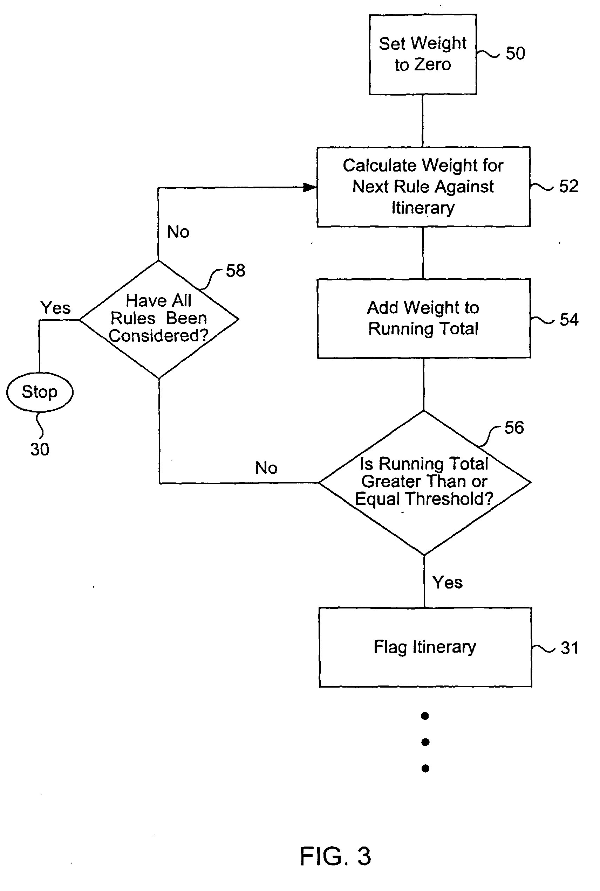

Figure 3 is a flow diagram of the decision diamond 28 of the IFP 10 used to determine the suitability of a given itinerary for air charter. At the start of the decision process, the weighting factor is initially set to zero (step 50). Next the itinerary is compared to the first rule and its weight is calculated (step 52). The weight is then added to the previous running weight total (step 54). In decision diamond 56, the running weight total is then compared to the predetermined threshold. If the running weight total is less than the predetermined threshold, then a check is performed if all of the rules have been considered (diamond 58). If all the rules have been considered and the running weight total is less than the predetermined threshold, then the itinerary is not suitable for air charter and flow of the IPF 10 stops (step 30). On the other hand, if additional rules need to be considered, then the above sequence is repeated for each outstanding rule. Whenever the running weight total exceeds the predetermined threshold, then the itinerary is flagged as suitable for charter (step 31).

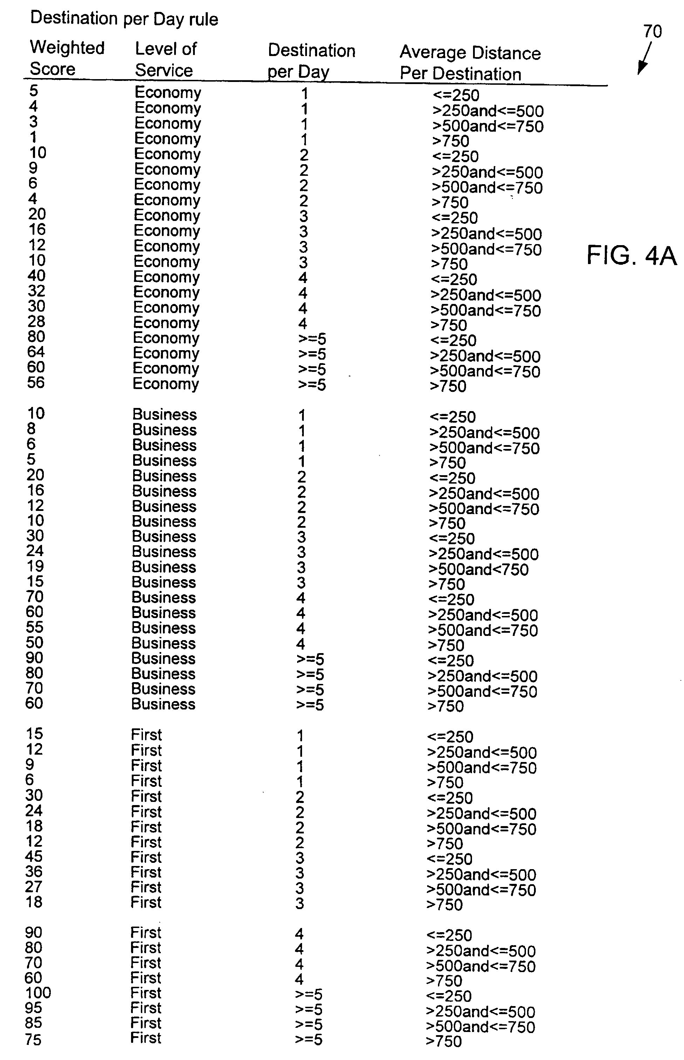

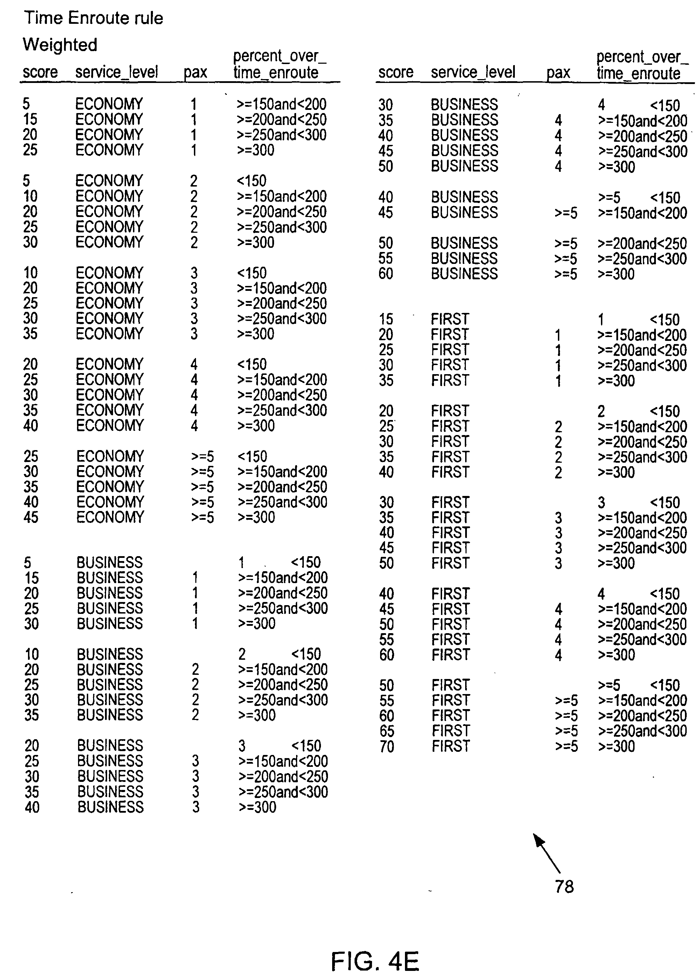

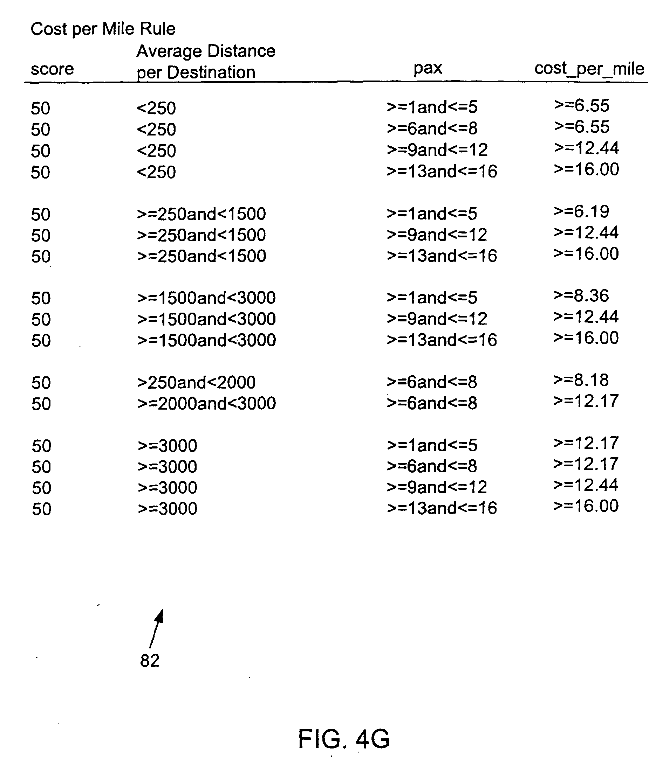

Referring to Figures 4A-4G, a series of diagrams illustrating several exemplary rules are shown. Specifically convenience rules for "Destinations per Day", "No Availability of Commercial Flights Within X Hours of Requested Time", "No Availability of Commercial Flights on Date Requested" , and "No Airport at Selected Departure/destinations" are illustrated in Figures 4A - 4D respectively. Productivity rules for "Time En-route and "Requested Class of Travel vs. Available Class of Travel" are illustrated in Figures 4E-4F. Price rule "Cost per Mile" is illustrated in Figure 4G. Each of these rules is described in detail below.

In Figure 4A, a weight chart for the "Destinations per Day" rule according to the present invention is shown. The chart 70 includes columns for the weighted score, level of service (economy, business and first class), number of destinations per day (1 through 5), and the "average distance per destination" respectively. Within each class, the number of destinations (from 1 through greater or equal to 5) is designated along with four ranges of the average distance per destination (less than or equal to 250 miles, greater than 250 miles and less than or equal to 500 miles, greater than 500 miles or less than or equal to 750 miles, and greater than 750 miles) is provided. Charters are generally effective for making multiple stops between relatively close locations in a given day. Accordingly itineraries with multiple destinations within relatively close proximity of one another are given a higher weight score. On the other hand as the number of destinations per day decreases and the distance between the stops increases, the effectiveness of a charter decreases. Such itineraries are therefore given a relatively low score under this rule. For example, with four destinations per day in business class, the weighted score for the average distance per destination of less than or equal to 250 miles, greater than 250 miles and less than or equal to 500 miles, greater than 500 miles or less than or equal to 750 miles, and greater than 750 miles is "70", "60", "55" and "50" respectively.

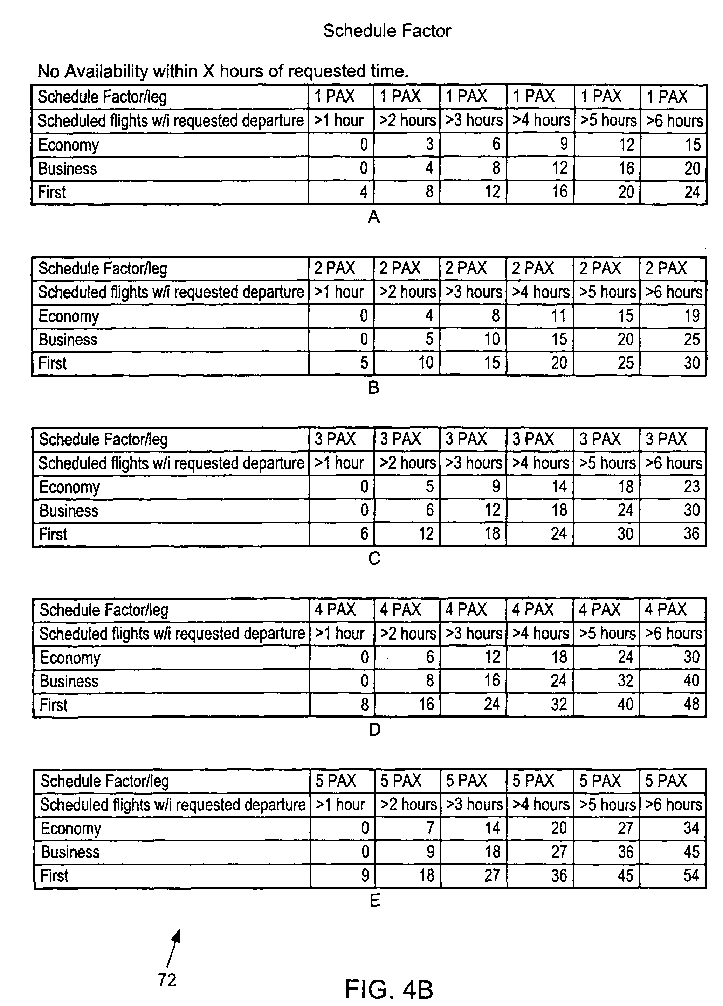

In Figure 4B, the weight chart for "No Availability of Commercial Flights Within X Hours of Requested Time" is shown. This chart 72 includes rule tables (a-e) for one (1) through five (5) passengers respectively. Each table includes a different weight for economy, business and first class if a commercial flight is not available within (1, 2, 3, 4, 5, and 6 hours) respectively of the requested travel time. Since time is generally more important than cost savings for business and first class passengers, the weight score for first and business class passengers inconvenienced by the lack of availability of commercial flights is larger than for economy class. The weights also increase as the number of hours before a commercial flight is available increases. For example, if no commercial flight is available for five hours for three passengers traveling in business class, the weighted score would be twenty four (24). If this same itinerary included a second leg with a commercial flight not available for 3 hours, an additional score of twelve would be added making the total weight for this rule to equal thirty six (24+12=36).

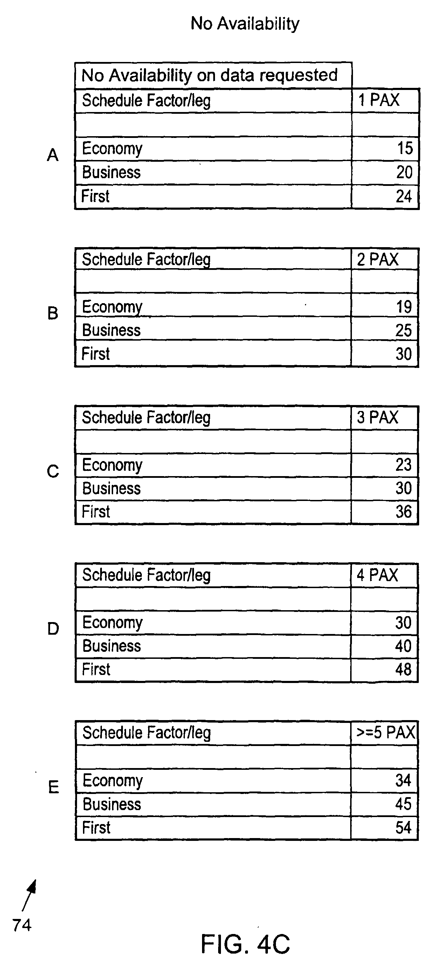

In Figure 4C, the weight chart for "No Availability on Date Requested" is shown. This chart 74 includes rule tables (a-e) for one (1) through five (5) passengers respectively. Each table (a-e) includes a different weight for economy, business and first class if a commercial flight is not available on a requested date. For example, if a flight is not available on a requested travel date for two first class passengers, the weighted score is thirty (30). Again if an itinerary includes multiple legs where a flight is not available, the weight score is cumulative.

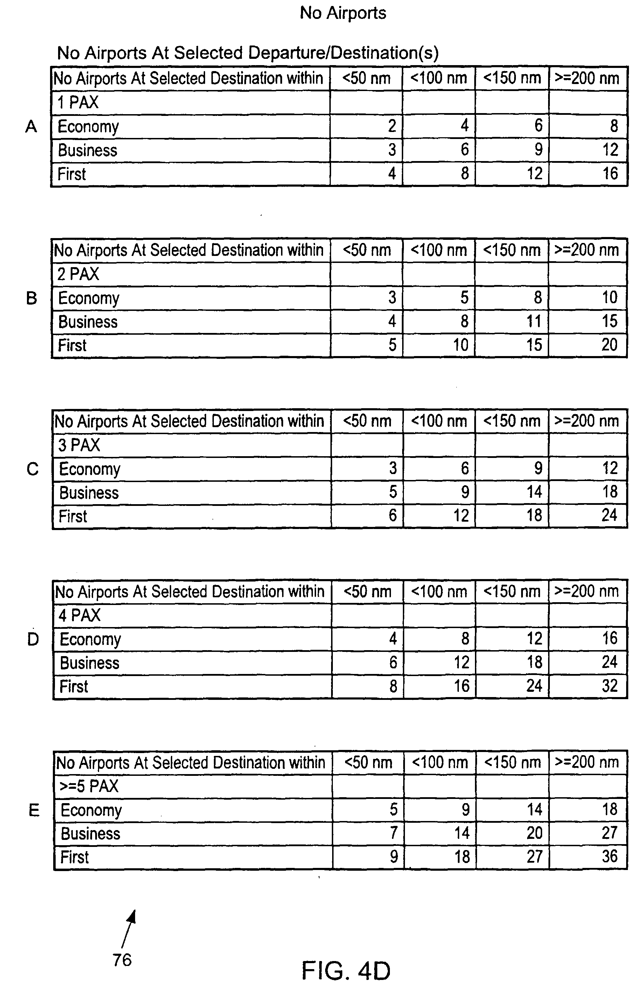

In Figure 4D, the weight chart for "No Airports at Selected Departure/Destination(s)" is shown. This chart 76 includes rule tables (a-e) for one (1) through five (5) passengers respectively. Each table (a-e) includes a different weight for economy, business and first class if a requested airport departure/destination city is more than fifty (50), one hundred (100), one hundred and fifty (150), or greater than two hundred (200) nautical miles from the closest airport serviced by a commercial flight. For example, if an itinerary includes five (5) business class passengers and the closest airport serviced by a commercial airline is within one hundred and fifty (150) nautical miles away, the weight score for this rule is twenty (20). Again if an itinerary includes multiple departure/destination(s) where a flight is not available, the total weight for this rule is cumulative.

In Figure 4E, the weight chart for the "Time En-route" rule is shown. This chart 78 includes a column of weighted scores, a service level column, a number of passengers (pax) column, and a percent over time en-route column. For each service class, the chart 78 includes a weighted score for the number of passengers (1 through 5) and for the percent over time en-route a charter will save versus a commercial flight. For example, the weighted score for one first class traveler is fifteen (15), twenty (20), twenty five (25), thirty (30), and thirty five (35) if the en-route time on a commercial flight compared to a charter is less than (150%), equal or greater than (150%) but less than (200%), greater or equal than (200%) but less than (250%), greater or equal than (250%) but less than (300%), and greater than (300%) respectively. Since first class and business class travelers are generally more concerned about convenience than cost, the weighted score for these travelers is greater than economy class and increases as the time savings of using air charter increases.

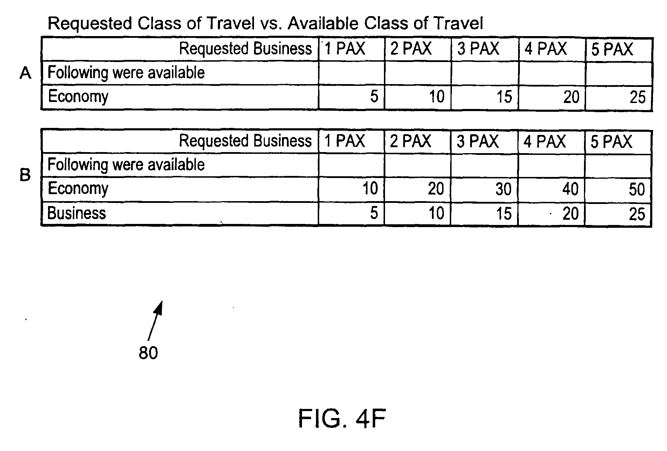

In Figure 4F, the weight chart for the "Requested Class of Travel vs. Available Class of Travel" is shown. This chart 80 includes a first table (a) which is used when a traveler(s) requested business class and only coach class is available. In table (a), the weighted score is five (5), ten (10), fifteen (15), twenty (20), and twenty five (25) for one through five business class passengers respectively. The table (b) is provided for travelers that requested first class and only business or economy class is available. In this table, the weighted score for the availability of business class is five (5), ten (10), fifteen (15), twenty (20), and twenty five (25) for one through five first class passengers respectively. The weighted score when only economy is available is ten (10), twenty (20), thirty (30), forty (40), and fifty (50) for one through five first class passengers respectively.

In Figure 4G, the weight chart for a cost per mile rule is shown. The chart 82 includes columns for the weighted "score", "average distance per destination", number of passengers ("pax"), and a "cost per mile" threshold respectively. The average distance per destination includes ranges of less than 250 miles, greater than or equal to 250 miles and less than 1500 miles, greater than or equal to 1500 miles and less than 3000 miles, greater than 250 miles and less than 2000 miles, less than or equal to 2000 miles and less than 3000 miles, and greater than or equal to 3000 miles. The cost per mile threshold varies depending on the number of passengers and the average distance between destinations. For example, with average distances between destinations of less than 250 miles, the cost per mile threshold is $6.55, $6.55, $12.44, and $16.00 for itineraries that include between one and five passengers, between six and eight passengers, between nine and twelve passengers, and between thirteen and sixteen passengers respectively. The cost per mile threshold increases as the number of passengers increases because generally a larger, more expensive, charter aircraft is needed to satisfy the itinerary. Also as the average distance per destination increases, a larger, more expensive, aircraft is also typically needed. It should be noted that the cost per mile threshold is arbitrarily set. In certain embodiments of the invention, it is set to a level sufficiently high for each (average distance-pax) combination so that every itinerary reviewed by the IPF is not selected for air charter. In other words, this rule is set to filter out itineraries satisfied by commercial airlines on a relatively cost effective basis. On the other hand if the cost per mile threshold is satisfied, meaning the cost of an air charter is less than or almost the same as a commercial flight, then the weighted score should be set to equal the predetermined threshold so the itinerary is automatically flagged. In an alternative embodiment, the actual cost per mile for charter can be compared to the actual cost per mile on a scheduled commercial flight. Again if the cost of a charter is less than the actual cost of the commercial flight per mile, then the itinerary should automatically be flagged.

It should be noted that the rules and weighted scores provided above are only exemplary and that they can be changed or modified. For example, other prices rules can be used such as a "risk pricing" program. This rule analyses various aspects of a customer itinerary request, and may sell a particular charter such as a one-way trip at or below cost price by not including the costs of the return leg. The charter may be sold at this reduced price because the charter operator may be willing to assume the risk that a buyer for the return leg can be found. As a consequence, any factor that increases the chance that a buyer for the return leg can be found can be used to offset the price to the original buyer. The aspects of an itinerary considered under this rule may include, but is not limited to: (a) distance of the empty leg. The greater the distance of an empty leg, the greater the chance the return flight can be sold to another party. Consider a one-way charter between San Francisco and New York. The chance that the return trip can be sold to another party located on the east coast, for example Boston, is much greater that a charter between two relatively close locations, for example St. Louis and Detroit. (b) advance purchase. The further in advance the purchase of the trip takes place before the actual trip, the more likely the empty leg can be sold to another customer; (c) valuable points of departure and arrival. The risk pricing rule recognizes certain geographical areas and city pairs are very popular and therefore there is a higher likelihood that a buyer for an empty leg can be found. As a result, the cost of the initial trip may be discounted based on the assumption a buyer for the empty leg will be found; (d) the type or category of selected aircraft. The risk pricing rule may consider the number (quantity) of a particular type or category of aircraft. For example, there are fewer Gulfstream jet aircraft than Learjet aircraft in the air charter fleet. Therefore, if a customer decides to book a charter on a Learjet aircraft, the chance of there being an available aircraft of this type in the relevant vicinity on the travel is higher than that of a Gulfstream jet. Therefore under the risk pricing rule, the Learjet aircraft maybe discounted relative to the Gulfstream aircraft; and (e) there are certain dates throughout the calendar year where availability of certain aircraft may be tighter than normal (high season-dates). These dates may therefore be discounted compared to an out-of-season date under the risk pricing rule. Since the risk pricing rule is likely to reduce the price for air charter, more travelers will be able to take advantage of this type of transportation. Thus air charter can become more affordable and can be feasible for a greater number of air travelers. Other rules that may be considered include but are not limited to a ride sharing rule for example.

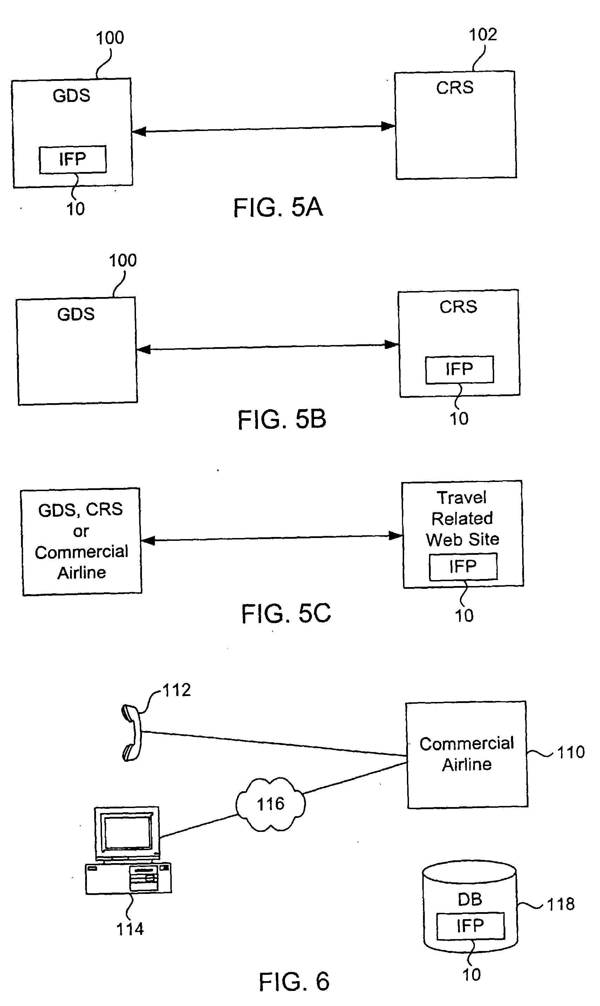

Figures 5A and 5B are system level block diagrams of the IFP 10 used with a standard Global Distribution Service (GDS) and a Computer Reservation System (CRS) according to two embodiments of the present invention. In one embodiment, the IFP 10 can be used as a module integrated into a GDS system 100, such as SABRE or AMADEUS. GDS systems are large databases that contain flight and reservation information for one or more commercial airlines and are made available to members of the travel industry such as travel agents. Alternatively as illustrated in Figure 5B, the IFP 10 can reside at and flag itineraries at the CRS 102. By way of example, a traveler may inform a travel agent of plans to travel first class between San Francisco, Dallas and Boston on given departure and return dates. The agent in response enters this information into the GDS. The GDS then generates a list of commercial flights among the commercial airlines that accommodate the traveler's itinerary (i.e., the reply may include a three flights on United Airlines, five on American Airlines, and four on Delta Airlines along with the cost, and departure and arrival times for each flight). The traveler can then select the most suitable and the agent can then book the selected itinerary using the CRS 102. According to the embodiment of the Figure 5A, the IFP 10 resides on the GDS 100. Consequently as travel itineraries are entered to the GDS, the itineraries are analyzed and flagged in the manner described above. Alternatively the itineraries can be flagged at the CRS 102 when or prior to a reservation for a flight is made. With either embodiment, the traveler is notified that their travel plans may be better accommodated by chartering an aircraft rather than a scheduled commercial flight with the IPF 10. In Figure 5C, a travel web site hosted by an application server with the IFP 10 is shown. In this embodiment, the IFP 10 flags itineraries when submitted to a GDS, CRS or a commercial airline over the Internet.

Figures 6 is system level block diagram of the IFP 10 used in a reservation booking system used by a commercial airline according to one embodiment of the present invention. As is common practice in the airline industry, a traveler may contact a commercial airline 110 (i.e., United, Delta, etc.) either directly using a telephone 112 or indirectly through a reservation booking web site hosted by the airline over the Internet 116 using a computer 114. With either situation, the commercial airline 110 accesses its reservation database 118 to check for the availability of flights and seats that meet the traveler's itinerary and provides the possible flights to the traveler. In yet another embodiment of the invention, the IFP 10 can reside in the database 118. As travel queries are made to the database 118, the IFP 10 can analyze and flag the itineraries where air charter may be suitable. The commercial airline can then inform the traveler of the suitable air charter options as an alternative to the commercial flight.

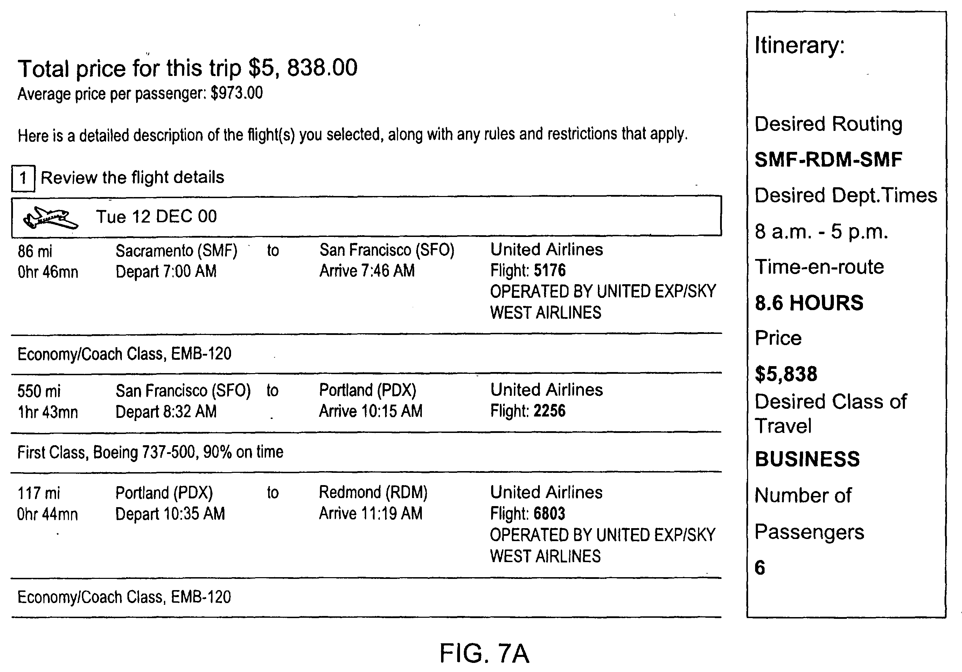

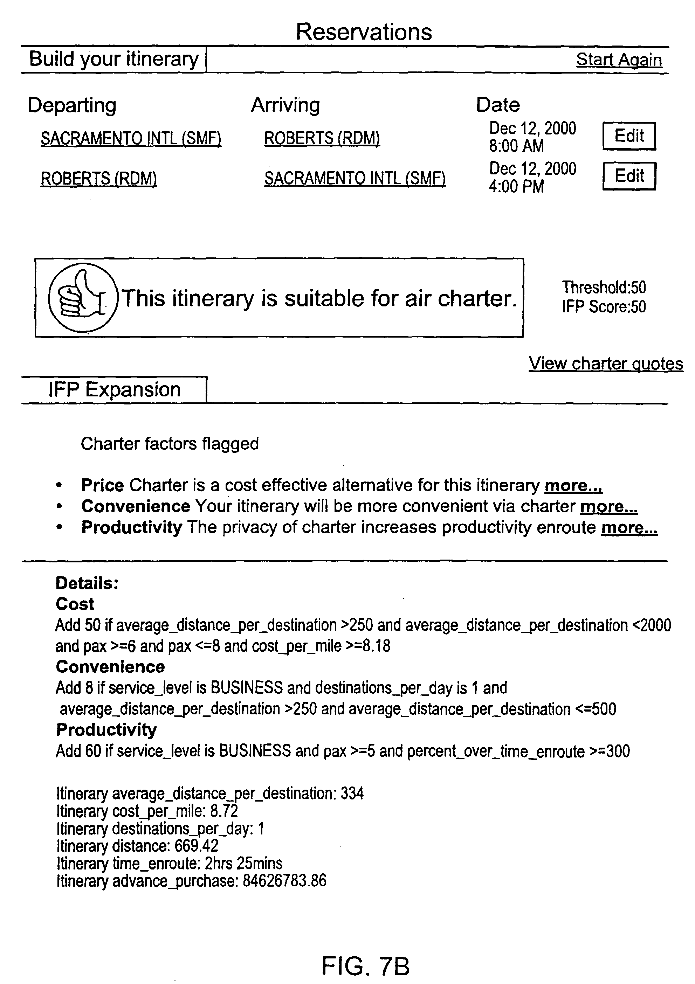

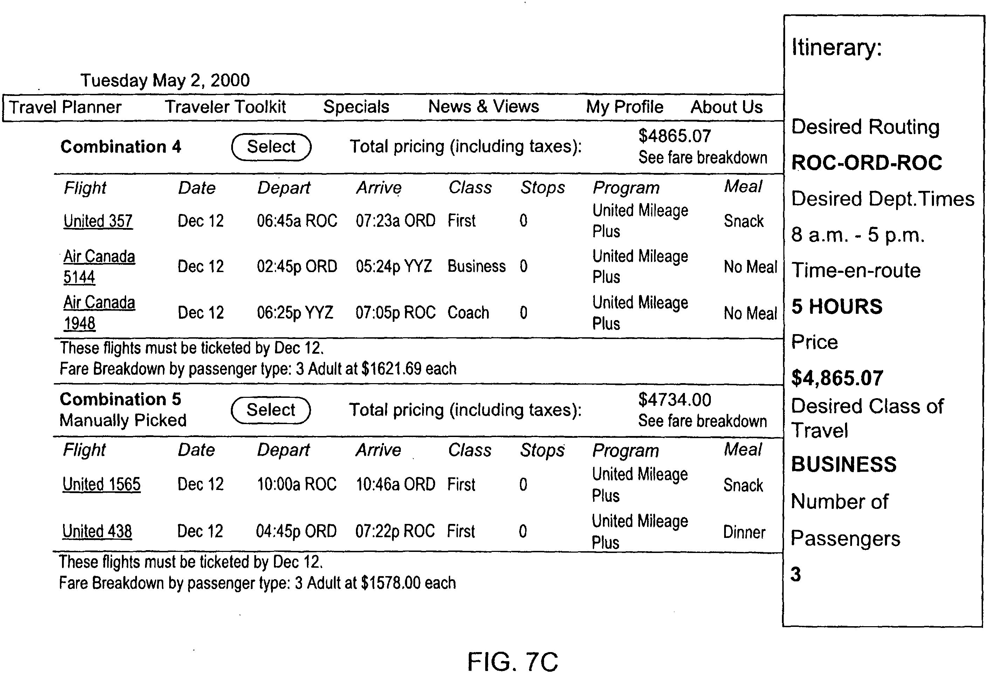

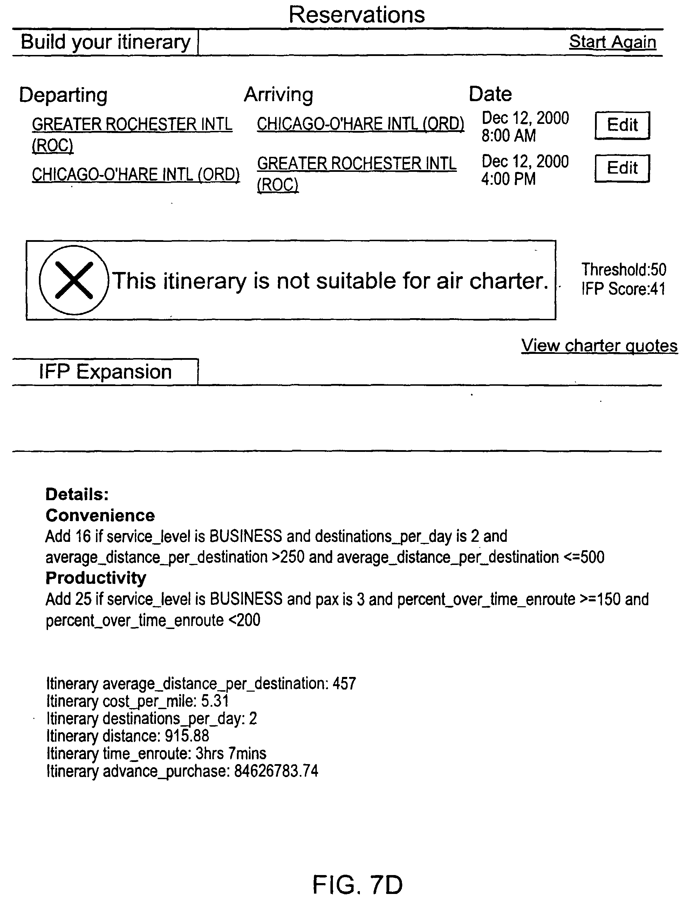

Referring to Figures 7A through 7D, a series of screen shots illustrating operation of the IFP 10 is shown. In Figure 7A, a flight itinerary and a possible commercial flights on United Airlines satisfying the itinerary is provided. The particulars of the itinerary includes six business class passengers departing Sacramento and travelling on December 12, 1999 to San Francisco, Portland and Redmond with desired departure times between 8AM and 5PM. The figure also shows a commercial flight information 14 for United Airlines for satisfying the itinerary for a total cost of $5,838.00. Figure 7B shows the results after the IFP 10 has determined if the itinerary is suitable for air charter. In this example, the IFP score (50) satisfies the predetermined threshold (50). Also displayed are the departing and final destination locations, the date and time of departure and arrival, and an explanation as to why the itinerary is suitable for air charter under the price, convenience and productivity rules described above. In Figures 7C and 7D, two screen shots are shown where an itinerary is not flagged for air charter.

Although only a few embodiments of the present invention have been described, it should be understood that the present invention may be embodied in many other specific forms without departing from the spirit or the scope of the invention. Therefore, the present examples are to be considered as illustrative and not restrictive, and the invention is not to be limited to the details given herein, but may be modified within the scope of the appended claims.

## Claims

1. A computer-readable medium comprising computer code configured to flag flight itineraries for air charter, the computer code configured to:
receive a flight itinerary;
apply a set of weighted rules to the flight itinerary;
generate a weight total for the itinerary; and
flag the itinerary as suitable for air charter if the weight total satisfies a predetermined threshold.

2. The computer-readable medium of claim 1, wherein the computer code configured to generate the weight total is further configured to:
set an initial weight to zero;
successively calculate a rule weight score for the rules by comparing the itinerary to the rules; and
generate the weight total by successively adding the rule weight score for the rules.

3. The computer-readable medium of claim 2, wherein the computer code is further configured to stop successively calculating the rule weight scores for each rule when the weight total satisfies the predetermined threshold.

4. The computer-readable medium of claim 1, wherein the computer code is further configured to not flag the itinerary if the weight total does not satisfy the predetermined threshold.

5. The computer-readable medium of claim 1, wherein the set of rules includes a convenience rule.

6. The computer-readable medium of claim 5, wherein the convenience rule includes one of the following types of convenience related factors: destinations per day defined by the itinerary; no availability of scheduled airlines for the requested dates defined by the itinerary; no availability of scheduled commercial airline flights within a defined period of the requested travel time as defined by the itinerary; and no availability of airports serviced by commercial airlines in the preferred departure or arrival locations as defined by the itinerary.

7. The computer-readable medium of claim 1, wherein the set of rules includes a productivity rule.

8. The computer code of claim 7, wherein the productivity rule includes one of the following productivity related factors: comparison of total time en-route for the itinerary on a scheduled commercial airline versus total en-route time for travel by air charter; and the class of travel defined by the itinerary.

9. The computer-readable medium of claim 1, wherein the set of rules includes a price rule.

10. The computer-readable medium of claim 9, wherein the price rule considers at least one of the following price related factors: advanced purchase of the itinerary on air charter; cost per mile of the itinerary on air charter versus commercial airlines; travel city pairs as defined by the itinerary; other departure and arrival points as defined by the itinerary; and ride sharing.

11. The computer-readable medium of claim, wherein the set of rules includes a risk price rule, the risk price rule considering at least one of the following factors: distance of an empty leg of an air charter; advance purchase of the air charter; the departure and arrival locations of the air charter; type of chartered aircraft; and dates of travel for the air charter.

12. The computer-readable medium of claim 1, wherein the computer code on the computer-readable medium resides on a Global Distribution Service.

13. The computer-readable medium of claim 1, wherein the computer code on the computer-readable medium resides on a Computer Reservation System.

14. The computer-readable medium of claim 1, wherein the computer code on the computer-readable medium resides within the reservation information computing infrastructure of a commercial airline.

15. The computer-readable medium of claim 1, wherein the computer code on the computer-readable medium resides on a web server that is accessible over the Internet.

16. The computer-readable medium of claim 1, wherein the computer code on the computer-readable medium resides on an application server of a travel related web site.

17. A method to flag flight itineraries for air charter comprising:
receiving a flight itinerary;
applying a set of weighted rules to the flight itinerary;
generating a weight total for the itinerary; and
flagging the itinerary as suitable for air charter if the weight total satisfies a predetermined threshold.

18. The method of claim 17, wherein generating the weight total further comprises:
setting an initial weight to zero;
successively calculating a rule weight score for the rules by comparing the itinerary to the rules; and
generating the weight total by successively adding the rule weights for the rules.

19. The method of claim 18, further comprising stopping the successive calculating the rule weight score for the rules when the weight total satisfies the predetermined threshold.

20. The method of claim 17, further comprising not flagging the itinerary if the weight total does not satisfy the predetermined threshold.

21. The method of claim 17, wherein the set of rules includes a convenience rule.

22. The method of claim 21, wherein the convenience rule includes one of the following types of convenience rules: destinations per day defined by the itinerary; no availability of scheduled airlines for the requested dates defined by the itinerary; no availability of scheduled commercial airline flights within a defined period of the requested travel time as defined by the itinerary; and no availability of airports serviced by commercial airlines in the preferred departure or arrival locations as defined by the itinerary.

23. The method of claim 17, wherein the set of rules includes a productivity rule.

24. The method of claim 23, wherein the productivity rule includes one of the following productivity related factors: comparison of total time en-route for the itinerary on a scheduled commercial airline versus total en-route time for travel by air charter; and the class of travel defined by the itinerary.

25. The method of claim 17, wherein the set of rules includes a price rule.

26. The method of claim 25, wherein the price rule considers at least one of the following price related factors: advanced purchase of the itinerary on air charter; cost per mile of the itinerary on air charter versus commercial airlines; travel city pairs as defined by the itinerary; other departure and arrival points as defined by the itinerary, and ride sharing.

27. The method of claim 17, wherein the set of rules includes a risk price rule, the risk price rule considering at least one of the following factors: distance of an empty leg of an air charter; advance purchase of the air charter; the departure and arrival locations of the air charter; type of chartered aircraft; dates of travel for the air charter, and region of travel for the air charter.

28. A system comprising a computer, the computer configured to:
receive a flight itinerary;
apply a set of weighted rules to the flight itinerary;
generate a weight total for the itinerary; and
flag the itinerary as suitable for air charter if the weight total satisfies a predetermined threshold.

29. The system of claim 28, wherein the computer is further configured to:
set an initial weight to zero;
successively calculate a rule weight score for the rules by comparing the itinerary to the rules; and
generate the weight total by successively adding the rule weight scores for each rule in the set of rules.

30. The system of claim 29, wherein the computer is further configured to stop successively calculating the rule weight scores for the rules when the weight total satisfies the predetermined threshold.

31. The system of claim 30, wherein the computer is further configured to not flag the itinerary if the weight total does not satisfy the predetermined threshold.

32. The system of claim 28, wherein the set of rules includes one or more of the following types of rules: a convenience rule, a productivity rule, a price rule; and a risk price rule.

33. The system of claim 28, wherein the computer is further configured to provide a Global Distribution System for airline travel.

34. The system of claim 28, wherein the computer is further configured to provide a Computer Reservation System for airline travel.

35. The system of claim 28, wherein the computer is further configured as an application server for a travel related web site.
